# EUROPEAN PATENT SPECIFICATION

(11) **EP 0 608 103 B1**
(45) Date of publication and mention of the grant of the patent: **22.07.1998**
(21) Application number: 94300340.0
(22) Date of filing: 18.01.1994
(51) Int. Cl.: B65B 35/24, B65B 43/52, B65G 19/02, B65G 47/52

(54) **Packaging machine with flight bar carton conveying system**
Fördersystem mit Mitnehmern für Kartons an Verpackungsmaschinen
Système de transport à poussoirs pour cartons en machines d'emballage

(30) Priority: 19.01.1993 US 6055
(43) Date of publication of application: 27.07.1994
(73) Proprietor: THE MEAD CORPORATION, Dayton Ohio 45463 (US)
(72) Inventor: Calvert, Rodney K., Dunwoody, Georgia 30338 (US); Fishback, Alton J., Austell, Georgia 30001 (US); VanHorne, George R., Atlanta, Georgia 30306 (US)
(74) Representative: Hepworth, John Malcolm

(56) References cited:
- DE-A- 1 461 921
- DE-A- 2 655 128
- DE-C- 3 141 144
- GB-A- 914 155
- US-A- 3 017 985

## Description

This invention relates to a carton conveying system incorporating flight bars and more particularly to a packaging machine which includes such a conveying system.

Known carton conveying systems having flight bars involved in moving cartons along a working reach of the conveying system which operate so that the flight bars are caused to travel into a return reach of an endless path by passing over sprockets having relatively small radii which tends to cause angular acceleration of the flight bars as they travel from the working reach into the return reach at the outfeed end of the system. As a result, a carton being transferred from the outfeed end onto an outfeed conveyor must be accelerated at a faster rate than its travel along the working reach away from a downwardly accelerating flight bar in order to prevent damage to the carton.

GB-C-914155 discloses a conveying device comprising conveying elements which are moveable around an endless track and are adapted to convey objects along part of the closed endless track. An endless driving member is provided which conforms to the closed endless track except at one part which constitutes a spacing station. There are spacing means adapted to receive conveyor elements at the spacing station and to feed them back into engagement with the driving member. The elements are driven by being trapped between the driving member and the endless track so that for a particular speed of the driving member the spacing between successive conveyor elements is dependent upon the frequency at which these spacing means forward the conveying elements from the spacing station.

Likewise, DE-A-1461921 discloses a conveying system comprising conveying elements which are moveable around an endless track and are adapted to convey objects along part of the closed endless track. A barrier is provided at the loading station which holds back the carriers. A further folding element releases the laden carriers in synchronism with the machine. The objects are transferred to an outfeed conveyor. Means is provided to inhibit the tendency of the moveable elements to accelerate at the outfeed end of the working reach.

The system of the present invention also seeks to inhibit the tendency of the flight bars to accelerate at the outfeed end of the working reach, which is desirable for the longetivity of machine operation and to minimise the incidents of carton damage

A further problem associated with known carton conveying systems is the transfer of cartons from one conveyor to the next. The aforementioned prior art is not directed to attaining a solution to this problem.

The present invention seeks to overcome, or at least mitigate, these problems.

One aspect of the invention provides a carton conveying system incorporating a series of spaced flight bars movable in an endless path through a working reach and a return reach, wherein the flight bars are caused to travel out of the plane of their working reach at an outfeed end of said endless path into their return reach while cartons conveyed along said working reach are transferred from said working reach onto an outfeed conveyor characterized in that the outfeed end of said endless path is adapted to inhibit the tendency of the flight bars to accelerate during travel from their working reach to their return reach and in that support means is provided to give temporary support to cartons transferred from said working reach to said outfeed conveyor, said support means is adapted to act in synchronisation with said flight bars.

According to a feature of this aspect of the invention said flight bars may be caused to travel over a ramp structure at the outfeed end of the endless path which structure creates a downward path of travel having a relatively large radius of curvature. In constructions where a ramp structure is provided the ramp structure may be disposed such that the path of travel of said flight bars out of the plan of the working reach passes beneath said outfeed conveyor before the flight bars move into their return reach.

Preferably, said flight bars pass through a gap provided between said working reach and said outfeed conveyor during said travel.

According to another optional feature of this aspect of the invention, said carton support means may be adapted to accommodate flight bars passing through said gap.

Optionally, said outfeed conveyor is disposed adjacent an outfeed end of said working reach further comprising means to extend the path of said travel of the flight bars so as to inhibit the tendency of the flight bars to accelerate at said outfeed end and means to support cartons during said transfer as the flight bars travel out of the plane of the working reach.

According to another optional feature of this aspect of the invention, said carton support means may be adapted to interfere with the path of said travel of the flight bars to provide accommodation for successive flight bars during said travel while alternately providing support for successive cartons during said transfer.

According to a further optional feature of this aspect of the invention, means are provided to stabilize cartons during said transfer.

Optionally, said flight bars mounted on moveable chains so that transfer of the flight bars from their working reach to their return reach may be provided with a ramp for passing the chains around a large radius of curvature which in turn causes the chains to move out of the path of movement of the cartons and also requires a large gap between the working reach and outfeed conveyor which gap is bridged by said support means comprising a rotatable support which engages oncoming cartons and conveys such cartons onto the outfeed conveyor and guide means disposed on opposite sides of the path of movement of the cartons characterised in that the cartons are supported and moved by said rotatable support wheel and in that the rotatable support wheel is moveable in synchronism with said chains

A packaging machine embodying the invention will now be described, by way of example, with reference to the accompanying drawings, in which:-
FIG.1 is a perspective view of the outfeed end of a packaging machine which incorporates a conveying system according to this invention;
FIG.2 is a fragmentary side elevation of the outfeed end of the machine;
FIG.3 is a cross sectional view taken along the line 3-3 in FIG.2; and

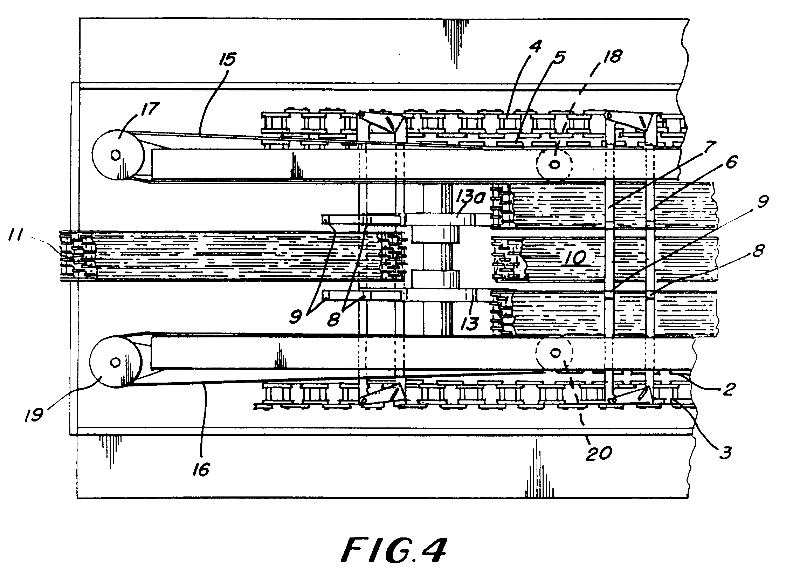

FIG.4 is a fragmentary top plan view of the outfeed end of the machine.

Referring to the drawings, a portion 1 of the outfeed end of the machine comprises a dual endless drive which includes endless chains 2 and 3 on one side of the machine and similar endless drive chains 4 and 5 on the opposite side of the machine. An endless series of flight bars are interconnected with the chains 2, 3, 4 and 5 as disclosed in U.S. application serial number 08/108,918, filed August 19, 1993 (Attorney Docket D-2713). Each flight bar unit comprises both a leading component 7 and a trailing component 6 having upright posts 9 and 8, respectively. The working reach of the system includes a support surface 10 on which cartons, disposed between the flight bars, are conveyed and which may be a stationery platform as depicted or a movable conveyor.

Known machines which operate at moderate and slow speeds are constructed in such a manner that the drive chains of flight bars such as 6 and 7 are entrained about sprockets which are of relatively small diameter so that flight bars leaving the working reach of the system are suddenly moved downwardly about sprockets into the lower return reach. In this arrangement the flight bars tend to accelerate to rates which are undesirable to the operation of the machine and may damage cartons which are conveyed through the machine.

According to this embodiment of the present invention, in order to extend the path of travel of the flight bars from the working reach to the return reach a ramp structure 12a having a radius of curvature larger than that of sprocket 12 is provided at the outfeed end of the working reach.

However, the provision of such a ramp structure creates a larger gap than usual between the working reach 10 and the outfeed conveyor 11 over which cartons must pass as they are transferred onto the outfeed conveyor.

A rotatable support structure 13 is disposed in the gap so that it interferes with the path of travel of the flight bars and includes peripheral surfaces to provide support for cartons being transferred from the working reach 10 to the outfeed conveyor. The support structure has cutaway areas 14 which provide space in which the flight bars 6 and 7 and the uprights 8 and 9 are accommodated. The cutaway areas are alternated with peripheral carton support surfaces. The support structure includes a pair of coaxial discs 13, 13a which are mounted on a shaft for synchronised rotation. Rotation of the support discs is timed so that they alternately support a transferring carton and then temporarily accommodate a flight bar travelling from the working reach to the return reach.

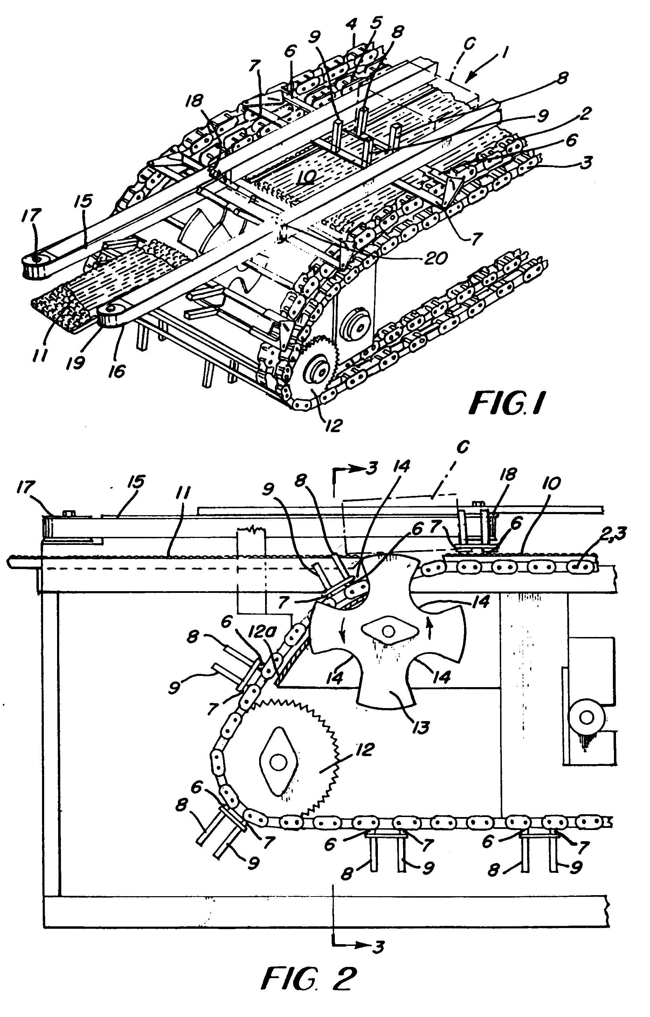

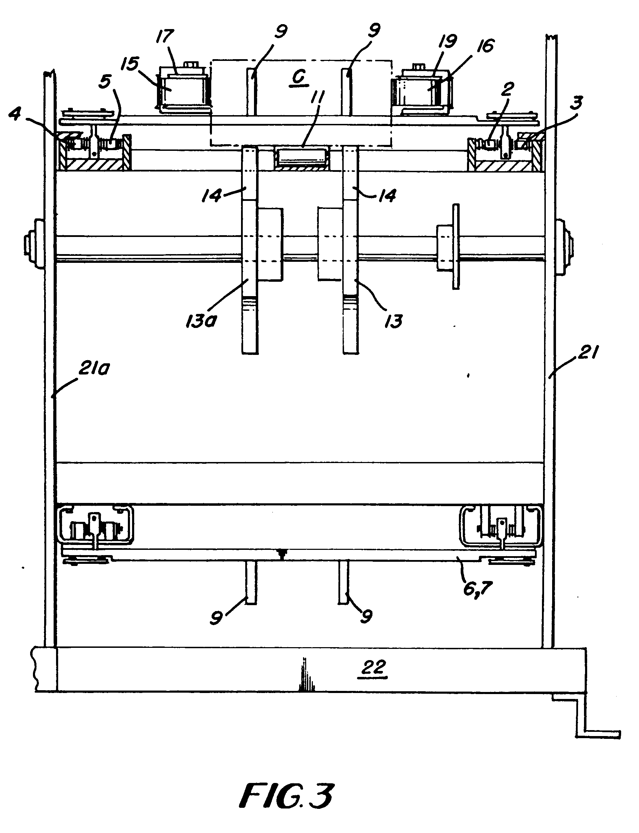

As best seen in Figure 2, the arcuate ramp 12a of a large radius of curvature form an extended path of travel for the flight bars so that they pass beneath the outfeed conveyor 11 during travel from the working reach to the return reach. This extended path of travel inhibits the tendency of the flight bars to accelerate at the outfeed end of the working reach and gives smoother and faster machine operation while minimizing risk of carton damage. A carton C is shown in broken lines in Figures 2 and 3.

In order to stabilize cartons as they pass along the working reach and over the support structure 13 during transfer, a belt 15 is mounted on one side of the machine and another similar belt 16 is mounted on the opposite side of the machine. Belt 15 is disposed about rollers 17 and 18 while belt 16 is disposed about rollers 19 and 20.

## Claims

1. A carton conveying system incorporating a series of spaced flight bars (6, 7) movable in an endless path through a working reach (10) and a return reach, wherein the flight bars (6, 7) are caused to travel out of the plane of their working reach (10) at an outfeed end (1) of said endless path into their return reach while cartons (C) conveyed along said working reach (10) are transferred from said working reach (10) onto an outfeed conveyor (11), wherein the outfeed end (1) of said endless path is adapted to inhibit the tendency of the flight bars (6, 7) to accelerate during travel from their working reach (10) to their return reach, characterised in that support means (13) is adapted to act in synchronisation with said flight bars (6, 7) so as to give temporary support to cartons (C) transferred from said working reach (10) to said outfeed conveyor (11).

2. A carton conveying system according to Claim 1, wherein said flight bars (6, 7) are caused to travel over a ramp structure (12a) at the outfeed end of the endless path which structure (12a) creates a downward path of travel having a relatively large radius of curvature.

3. A carton conveying system according to Claim 2, wherein said ramp structure (12a) is disposed such that the path of travel of said flight bars (6, 7) out of the plane of the working reach passes beneath said outfeed conveyor (11) before the flight bars (6, 7) move into their return reach.

4. A carton conveying system according to any of the preceding claims wherein said flight bars (6, 7) pass through a gap provided between said working reach (10) and said outfeed conveyor (11) during said travel.

5. A carton conveying system according to Claim 4, wherein said carton support means (13) is adapted to accommodate flight bars (6, 7) passing through said gap.

6. A carton conveying system according to any preceding claim, wherein said outfeed conveyor (11) is disposed adjacent an outfeed end of said working reach further comprising means (12a) to extend the path of said travel of the flight bars so as to inhibit the tendency of the flight bars to accelerate at said outfeed end and means (13) to support cartons during said transfer as the flight bars (6, 7) travel out of the plane of the working reach (10).

7. A carton conveying system according to Claim 6, wherein said carton support means (13, 13a) is adapted to interfere with the path of said travel of the flight bars (6, 7) to provide accommodation for successive flight bars (6, 7) during said travel while alternately providing support for successive cartons (C) during said transfer.

8. A carton conveying system according to Claim 6 or Claim 7, wherein means (15, 16) are provided to stabilize cartons during said transfer.

9. A carton conveying system according to claim 1 wherein said flights bars (6, 7) are mounted on moveable chains (2, 3, 4, 5) so that transfer of the flight bars (6, 7) from their working reach (10) to their return reach is provided with a ramp (12a) for passing the chains (2, 3, 4, 5) around a large radius of curvature which in turn causes the chains (2, 3, 4, 5) to move out of the path of movement of the cartons (C) and also requires a large gap between the working reach (10) and outfeed conveyor (11) which gap is bridged by said support means comprising a rotatable support (13) which engages oncoming cartons (C) and conveys such cartons (C) onto the outfeed conveyor (11), and guide means (15, 16) disposed on opposite sides of the path of movement of the cartons (C) characterised in that the cartons (C) are supported and moved by said rotatable support wheel (13, 13a) and in that the rotatable support wheel (13, 13a) is moveable in synchronism with said chains (2, 3, 4, 5).

## Patentansprüche

1. Schachtel-Beförderungssystem, das eine Reihe beabstandeter Schwunghebel (6, 7) umfaßt, die in einer Endlos-Wegstrecke durch einen Arbeitsbereich (10) und einen Umkehrbereich bewegbar sind, wobei die Schwunghebel (6, 7) gezwungen sind, sich aus der Ebene ihres Arbeitsbereichs (10) an einem Auswurfende (1) der Endlos-Wegstrecke in ihren Umkehrbereich zu bewegen, während Schachteln (C), die entlang des Arbeitsbereichs (10) befördert werden, aus dem Arbeitsbereich (10) auf eine Auswurf-Fördereinrichtung (11) überführt werden, wobei das Auswurfende (1) der Endlos-Wegstrecke angepaßt ist, die Neigung der Schwunghebel (6, 7) zu beschleunigen, während sie sich von ihrem Arbeitsbereich (10) zu ihrem Umkehrbereich bewegen, zu hemmen, dadurch gekennzeichnet, daß Stützmittel (13) angepaßt sind, synchron mit den Schwunghebeln (6, 7) zu wirken, dergestalt, um den Schachteln (C), die aus dem Arbeitsbereich (10) zu der Auswurf-Fördereinrichtung (11) überführt werden, zeitweise Stütze zu geben.

2. Schachtel-Beförderungssystem gemäß Anspruch 1, in welchem die Schwunghebel (6, 7) am Auswurfende der Endlos-Wegstrecke gezwungen sind, sich über eine Rampenstruktur (12a) zu bewegen, wobei die Struktur (12a) einen abwärts gerichteten Bewegungsweg mit einem relativ großen Krümmungsradius erzeugt.

3. Schachtel-Beförderungssystem gemäß Anspruch 2, in welchem die Rampenstruktur (12a) derart angeordnet ist, daß der Bewegungsweg der Schwunghebel (6, 7) aus der Ebene des Arbeitsbereichs heraus unterhalb der Auswurf-Fördereinrichtung (11) verläuft, bevor die Schwunghebel (6, 7) sich in ihren Umkehrbereich bewegen.

4. Schachtel-Beförderungssystem gemäß einem der vorstehenden Ansprüche, in welchem die Schwunghebel (6, 7) während der Bewegung einen Zwischenraum durchqueren, der zwischen dem Arbeitsbereich (10) und der Auswurf-Fördereinrichtung (11) bereitgestellt ist.

5. Schachtel-Beförderungssystem gemäß Anspruch 4, in welchem die Schachtel-Stützmittel (13) angepaßt sind, um die den Zwischenraum durchquerenden Schwunghebel (6, 7) aufzunehmen.

6. Schachtel-Beförderungssystem gemäß einem der vorstehenden Ansprüche, in welchem die Auswurf-Fördereinrichtung (11) angrenzend an ein Auswurfende des Arbeitsbereichs angeordnet ist und das weiterhin eine Einrichtung (12a) umfaßt, die den Bewegungsweg der Schwunghebel derart verlängert, um die Neigung der Schwunghebel, am Auswurfende zu beschleunigen, zu hemmen, sowie eine Einrichtung (13) zum Stützen der Schachteln während ihrer Überführung, wenn die Schwunghebel (6, 7) sich aus der Ebene des Arbeitsbereichs (10) herausbewegen.

7. Schachtel-Beförderungssystem gemäß Anspruch 6, in welchem die Schachtel-Stützeinrichtung (13, 13a) angepaßt ist, mit dem Bewegungsweg der Schwunghebel (6, 7) in Wechselwirkung zu treten, um für aufeinanderfolgende Schwunghebel (6, 7) während der Bewegung eine Akkommodation bereitzustellen, während wechselweise Stütze für aufeinanderfolgende Schachteln (C) während der Überfürung bereitgestellt wird.

8. Schachtel-Beförderungssystem gemäß Anspruch 6 oder 7, in welchem Mittel (15, 16) bereitgestellt sind, um die Schachteln während der Überführung zu stabilisieren.

9. Schachtel-Beförderungssystem gemäß Anspruch 1, in welchem Schwunghebel (6, 7) an bewegbaren Ketten (2, 3, 4, 5) montiert sind, so daß eine Überführung der Schwunghebel (6, 7) aus ihrem Arbeitsbereich (10) zu ihrem Umkehrbereich mit einer Rampe (12a) zum Passieren der Ketten (2, 3, 4, 5) um einen großen Krümmungsradius herum bewerkstelligt wird, was umgekehrt die Ketten (2, 3, 4, 5) dazu zwingt, sich aus dem Bewegungsweg der Schachteln (C) herauszubewegen und auch einen großen Zwischenraum zwischen dem Arbeitsbereich (10) und der Auswurf-Fördereinrichtung (11) notwendig macht, wobei der Zwischenraum durch die Stützeinrichtung überbrückt wird, die eine drehbare Stütze (13) umfaßt, die die ankommenden Schachteln (C) in Eingriff nimmt und solche Schachteln (C) auf die Auswurf-Fördereinrichtung (11) befördert, sowie Führungsmittel (15, 16), die an gegenüberliegenden Seiten des Bewegungsweges der Schachteln (C) angeordnet sind, dadurch gekennzeichnet, daß die Schachteln (C) durch das drehbare Stützrad (13, 13a) gestützt und bewegt werden, und dadurch, daß das drehbare Stützrad (13, 13a) synchron mit den Ketten (2, 3, 4, 5) bewegbar ist.

## Revendications

1. Système de convoyage de cartons comprenant une série de barres de transport espacées (6,7), déplaçables selon un trajet sans fin à travers une zone de travail (10) et une zone de retour, les barres de transport (6,7) étant amenées à sortir du plan de leur zone de travail (10) au niveau d'une extrémité de sortie (1) dudit trajet sans fin, pour revenir dans leur zone de retour, tandis que des cartons (C), transportés le long de ladite zone de travail (10), sont transférés de ladite zone de travail (10) sur un transporteur de sortie (11), l'extrémité de sortie (1) dudit trajet sans fin étant adaptée pour supprimer la tendance qu'ont les barres de transport (6,7) à accélérer pendant un déplacement de leur zone de travail (10) à leur zone de retour, caractérisé en ce que des moyens de support (13) sont adaptés pour agir en synchronisme avec lesdites barres de transport (6,7), de manière à assurer un support temporaire des cartons (C) transférés de ladite zone de travail (10) sur ledit transporteur de sortie (11).

2. Système de convoyage de cartons selon la revendication 1, dans lequel lesdites barres de transport (6,7) sont amenées à se déplacer sur une structure en rampe (12a) à l'extrémité de sortie du trajet sans fin, laquelle structure (12a) crée un trajet descendant de déplacement ayant un rayon de courbure relativement grand.

3. Système de convoyage de cartons selon la revendication 2, dans lequel ladite structure en rampe (12a) est disposée de telle sorte que le trajet de déplacement desdites barres de transport (6,7) hors du plan de la zone de travail passe au-dessous dudit transporteur de sortie (11) avant que les barres de transport (6,7) ne pénètrent dans leur zone de retour.

4. Système de convoyage de cartons selon l'une quelconque des revendications précédentes, dans lequel lesdites barres de transport (6,7) franchissent un intervalle prévu entre ladite zone de travail (10) et ledit transporteur de sortie (11), pendant ledit déplacement.

5. Système de convoyage de cartons selon la revendication 4, dans lequel lesdits moyens (13) de support des cartons sont adaptés pour recevoir des barres de transport (6,7) franchissant ledit intervalle.

6. Système de convoyage de cartons selon l'une quelconque des revendications précédentes, dans lequel ledit transporteur de sortie (11) est disposé au voisinage immédiat d'une extrémité de sortie de ladite zone de travail, comportant en outre des moyens (12a) destinés à étendre le trajet dudit déplacement des barres de transport, de manière à supprimer la tendance qu'ont les barres de transport à accélérer au niveau de ladite extrémité de sortie, et des moyens (13) pour supporter des cartons pendant ledit transfert, à mesure que les barres de transport (6,7) sortent du plan de la zone de travail (10).

7. Système de convoyage de cartons selon la revendication 6, dans lequel lesdits moyens (13,13a) de support des cartons sont adaptés pour interférer avec le trajet dudit déplacement des barres de transport (6,7), afin de recevoir des barres de transport successives (6,7) pendant ledit déplacement, tout en assurant en alternance un support pour des cartons successifs (C) pendant ledit transfert.

8. Système de convoyage de cartons selon la revendication 6 ou la revendication 7, dans lequel des moyens (15,16) sont prévus pour stabiliser les cartons pendant ledit transfert.

9. Système de convoyage de cartons selon la revendication 1, dans lequel lesdites barres de transport (6, 7) sont montées sur des chaînes mobiles (2,3,4,5) de telle sorte que le transfert des barres de transport (6,7), de leur zone de travail (10) à leur zone de retour, soit assuré à l'aide d'une rampe (12a) pour le passage des chaînes (2,3,4,5) sur un grand rayon de courbure, ce qui à son tour amène les chaînes (2,3,4,5) à sortir du trajet de déplacement des cartons (C), et requiert également un intervalle important entre la zone de travail (10) et le transporteur de sortie (11), cet intervalle étant comblé par lesdits moyens de support comportant un support rotatif (13) qui attrape des cartons arrivants (C) et transporte de tels cartons (C) sur le transporteur de sortie (11), et des moyens de guidage (15,16) disposés de part et d'autre du trajet de déplacement des cartons (C), caractérisé en ce que les cartons (C) sont supportés et déplacés par ladite roue de support rotative (13,13a) et en ce que la roue de support rotative (13,13a) est déplaçable en synchronisme avec lesdites chaînes (2,3,4,5).
